# FASCICULE DE BREVET EUROPEEN

(11) **EP 3 247 634 B1**
(45) Date de publication et mention de la délivrance du brevet: **09.01.2019**
(21) Numéro de dépôt: 16702581.6
(22) Date de dépôt: 21.01.2016
(51) Int. Cl.: B64D 29/06, F02K 1/72, F02C 7/20

(54) **ENSEMBLE ARRIÈRE DE NACELLE POUR TURBORÉACTEUR COMPRENANT UN BERCEAU POUR MÂT**
HINTERE GONDELANORDNUNG FÜR EIN STRAHLTRIEBWERK MIT EINEM GERÜST FÜR EINEN PYLON
REAR NACELLE ASSEMBLY FOR A TURBOJET COMPRISING A CRADLE FOR A PYLON

(30) Priorité: 21.01.2015 FR 1550491
(43) Date de publication de la demande: 29.11.2017
(73) Titulaire: Safran Nacelles, 76700 Gonfreville-l'Orcher (FR)
(72) Inventeur: BOILEAU, Patrick, 31170 Tournefeuille (FR); KERBLER, Olivier, 92160 Antony (FR); LEZERAC, Julien, 31000 Toulouse (FR); GAUTIER, Armel, 82800 Negrepelisse (FR); GRALL, Loïc, 78990 Elancourt (FR); TOUPET, Ludovic, 94140 Alfortville (FR)
(74) Mandataire: Chevalier, Renaud Philippe
(86) Numéro de dépôt international: PCT/FR2016/050122
(87) Numéro de publication internationale: WO 2016/116712

(56) Documents cités:
- EP-A1- 1 286 037
- EP-A2- 2 690 018
- WO-A1-2013/038093
- WO-A1-2014/132011
- WO-A2-2014/123595
- FR-A1- 2 966 882
- FR-A1- 2 995 637

## Description

L'invention concerne un ensemble arrière de nacelle pour turboréacteur comprenant un berceau et un dispositif d'inversion de poussée à grilles mobiles pour nacelle de turboréacteur d'aéronef, l'ensemble étant particulièrement adapté pour un mât réacteur du turboréacteur du type « corps ».

Un aéronef est généralement mû par plusieurs turboréacteur logés chacun dans une nacelle abritant un ensemble de dispositifs d'actionnement annexes liés à son fonctionnement et assurant diverses fonctions lorsque le turboréacteur est en fonctionnement ou à l'arrêt.

Ces dispositif d'actionnement annexes comprennent notamment un dispositif d'inversion de poussée.

Une nacelle de turboréacteur présente généralement une structure sensiblement tubulaire comprenant une entrée d'air en amont du turboréacteur, une section médiane destinée à entourer une soufflante dudit turboréacteur, une section aval destinée à entourer la chambre de combustion du turboréacteur et intégrant éventuellement des moyens d'inversion de poussée, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

La section aval d'une nacelle pour un tel turboréacteur présente généralement une structure externe fixe, dite Outer Fixed Structure (OFS) et une structure interne fixe concentrique, dite Inner Fixed Structure (IFS), entourant une section aval du turboréacteur abritant le générateur de gaz du turboréacteur.

Les structures interne et externe fixes définissent la veine destinée à canaliser le flux d'air froid qui circule à l'extérieur du turboréacteur.

Le rôle d'un inverseur de poussée est, lors de l'atterrissage d'un aéronef, d'améliorer la capacité de freinage de celui-ci en redirigeant vers l'avant au moins une partie de l'air éjecté du turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues et aérofreins de l'avion.

De manière générale, la structure d'un inverseur comprend un capot qui est monté mobile en translation longitudinale d'avant en arrière selon une direction sensiblement parallèle à l'axe de la nacelle, entre une position de fermeture dans laquelle le capot assure la continuité aérodynamique de la nacelle, et une position d'ouverture dans laquelle le capot ouvre un passage dans la nacelle.

Dans le cas d'un inverseur à grilles de déviation, la réorientation du flux d'air est effectuée par des grilles de déviation, associées à des volets d'inversion venant bloquer au moins partiellement la veine de circulation d'air, le capot n'ayant qu'une simple fonction de coulissement visant à découvrir ou recouvrir ces grilles de déviation.

Les volets d'inversion, également appelés volets de blocage, quant à eux, sont activés et entraînés par le coulissement du capot mobile jusqu'à venir obstruer au moins partiellement la veine en aval des grilles, de manière à optimiser la réorientation du flux d'air froid.

On connaît des nacelles dites à structure en O, connues sous la terminologie anglo-saxonne « O-Duct », qui possèdent une structure aval présentant une structure unique sensiblement périphérique s'étendant depuis un côté du mât réacteur jusqu'à l'autre côté.

Il s'ensuit qu'une telle structure présente généralement un unique capot sensiblement périphérique qui, à fin de maintenance, s'ouvre par translation aval le long de l'axe longitudinal de la nacelle.

Pour une description détaillée, on pourra se reporter aux documents FR 2 911 372 et FR 2 952 681.

Le mât réacteur est un moyen de liaison de l'ensemble propulsif sur l'aile de l'aéronef, qui porte le turboréacteur par des suspensions avant et arrière.

On connaît un mât dit du type « carter de soufflante », qui comporte une portion avant fixée sur le carter de soufflante du turboréacteur, en opposition au mât dit du type « corps », ou « core » selon le terme anglais, qui est fixé sur le corps du turboréacteur, c'est-à-dire en aval du carter de soufflante, par exemple sur le moyen du carter de soufflante ou sur le moyeu du compresseur haute pression du turboréacteur.

Par ailleurs, les nacelles à structure en O comportent des grilles de déviation qui sont montées mobiles en translation et aptes à être rétractées au moins partiellement dans l'épaisseur de la section médiane de la nacelle et viennent ainsi chevaucher le carter de soufflante lorsque l'inverseur de poussée est inactif, en position de jet direct. En position d'inversion de poussée, les grilles de déviation sont déplacées avec le capot mobile.

Dans le cas d'un inverseur de poussée pour une nacelle à structure en O, le mât peut être équipé de rails permettant le coulissement du capot mobile et des grilles.

Sur des ensemble propulsifs modernes, de grande dimension et possédant des structures d'une grande souplesse, cette configuration peut induire des contraintes importantes dans la structure de l'inverseur de poussée.

Le document WO 2013/038093 décrit un ensemble arrière de nacelle pour turboréacteur, comprenant un pylône de suspension sur lequel sont montés, par des liaisons pivot glissant, un capot et une structure interne.

On connait également un dispositif d'inversion de poussée décrit dans le document FR-A-3002785, qui comporte des rails qui sont agencés de part et d'autre du mât et qui assurent le coulissement du capot mobile et des grilles de déviation.

Ce type de dispositif présente des inconvénients notamment en ce qu'en cas de déplacement relatif du turboréacteur par rapport au mât, les grilles mobiles, qui sont fixées sur le mât, risques d'être soumises à des efforts de déformation.

En effet, pour limiter le volume des nacelles modernes, notamment la section radiale des nacelles, la section des grilles mobiles est limitée pour réduire leur encombrement, de sorte que l'inertie des grilles et la résistance mécanique qu'elles opposent est réduite.

De plus, il existe également un risque de déplacement relatif des rails entre eux et des variations géométriques importantes qui risquent de compromettre le bon fonctionnement de la cinématique de l'inverseur de poussée.

Enfin, le montage / démontage de l'ensemble propulsif implique de démonter tout ou partie de l'inverseur de poussée.

De plus, le dispositif d'inversion de poussée décrit dans le document FR-A-3002785 n'est pas adapté à un mât du type « corps » décrit précédemment.

En effet, le mât du type corps présente la particularité de comporter une portion avant longitudinale inclinée vers l'axe de la nacelle pour venir se fixer sur le corps du turboréacteur.

La présente invention vise notamment à résoudre ces inconvénients et se rapporte pour ce faire à un ensemble arrière de nacelle pour turboréacteur comprenant au moins un dispositif d'inversion de poussée par redirection d'un flux d'air circulant d'amont en aval dans une veine du turboréacteur et un mât conçu pour relier la nacelle sur la structure de l'aéronef, la nacelle s'étendant longitudinalement d'avant en arrière suivant un axe, le dispositif d'inversion de poussée comprenant au moins :
- un capot qui est monté mobile en translation longitudinale d'avant en arrière selon une direction sensiblement parallèle à l'axe de la nacelle, entre une position de fermeture dans laquelle le capot assure la continuité aérodynamique de la nacelle, et une position d'ouverture dans laquelle le capot ouvre un passage dans la nacelle, et
- au moins une grille coulissante d'inversion de poussée qui est entraînée par le capot mobile, entre une position escamotée entre un carter de soufflante et une enveloppe externe de la nacelle, correspondant à la position de fermeture du capot, et une position d'inversion de poussée correspondant à la position d'ouverture du capot, position dans laquelle la grille coulissante est déplacée vers l'aval de manière à pouvoir s'étendre à travers ledit passage ouvert par le capot, et un berceau qui est fixé sur le mât et qui comporte un premier longeron et un second longeron s'étendant globalement longitudinalement de part et d'autre du mât, lesdits longerons portant chacun des moyens de guidage en coulissement du capot mobile et de la grille coulissante,
caractérisé en ce qu'une portion arrière du berceau comporte un premier moyen de fixation avant sur le mât et un second moyen de fixation arrière sur le mât, lesdits moyens de fixation étant espacés longitudinalement, et le berceau comporte une portion avant, formant suspension, qui s'étend longitudinalement en porte à faux au-delà desdits moyens de fixation.

Cette caractéristique permet au berceau d'agir à la façon d'une suspension pour accompagner les mouvements du turboréacteur.

Ainsi, l'ensemble arrière de nacelle selon l'invention permet au dispositif d'inversion de poussée de suivre les mouvements du turboréacteur et par conséquent de réduire les contraintes transmises à l'inverseur de poussée.

Avantageusement, le berceau selon l'invention permet également de limiter les mouvements du turboréacteur.

Selon une autre caractéristique, le mât présente un tronçon avant qui est relié sur le corps du turbocompresseur par l'intermédiaire d'une première suspension.

De plus, les longerons s'étendent globalement longitudinalement depuis le mât en présentant avec le mât un angle d'inclinaison de façon à compenser l'angle d'inclinaison du mât plongeant vers le corps du turboréacteur, de sorte que le berceau surplombe le mât.

Selon un autre aspect, l'ensemble arrière de nacelle comporte au moins une traverse transversale qui relie le premier longeron et le second longeron du berceau entre eux transversalement et qui est conçue pour assurer le passage des efforts entre lesdits longerons.

De préférence, la traverse est une bielle qui comporte :
- une première liaison pivot montée libre en pivotement sur le premier longeron autour d'un axe globalement longitudinal, et
- une seconde liaison pivot montée libre en pivotement sur le second longeron autour d'un axe globalement longitudinal.

De plus, les moyens de guidage en coulissement du capot mobile et de la grille coulissante comportent au moins :
- une première paire de rails de guidage de la grille, comprenant un premier rail et un second rail qui sont agencés de part et d'autre du mât et qui sont conçus pour assurer le coulissement de la grille d'inversion de poussée, et
- une seconde paire de rails de guidage du capot, comprenant un premier rail et un second rail qui sont agencés de part et d'autre du mât et qui sont conçus pour assurer le coulissement du capot mobile.

Selon un exemple de réalisation, le premier rail de la première paire de rails de guidage de la grille et le premier rail de la seconde paire de rails de guidage du capot sont alignés sur une même ligne droite, et le second rail de la première paire de rails de guidage de la grille et le second rail de la seconde paire de rails de guidage du capot sont alignés sur une même ligne droite.

Avantageusement, le premier longeron du berceau comporte :
- une première portion de liaison qui est délimitée latéralement par un premier bord longitudinal qui s'étend au voisinage du mât, et par un second bord longitudinal qui porte au moins le premier rail de guidage de la grille,
- une seconde portion de liaison qui est délimitée latéralement par un premier bord longitudinal qui s'étend au voisinage du mât, et par un second bord longitudinal qui porte au moins le second rail de guidage de la grille.

De préférence, chaque portion de liaison comprend une ouverture qui est découverte par le capot mobile dans sa position d'ouverture, pour permettre la redirection du flux d'air, ladite ouverture étant adaptée pour être tout ou partie obstruée selon les besoins.

Avantageusement, selon une variante de réalisation, la nacelle présente une structure interne fixe qui comporte des îlots reliés sur le berceau.

Enfin, l'ensemble arrière de nacelle comporte au moins un verrou de sécurité de non déploiement intempestif du capot mobile.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de dessus d'ensemble qui illustre une nacelle équipée d'un dispositif d'inversion de poussée comportant un berceau portant un capot représenté en position de fermeture, selon l'invention ;
- la figure 2 est une vue schématique de dessus similaire à celle de la figure 1, qui illustre le capot en position d'ouverture ;
- la figure 3 est une vue de détail en perspective, qui illustre une partie du berceau fixée sur le mât ;
- la figure 4 est une vue de détail en perspective, qui illustre le berceau fixé sur le mât.

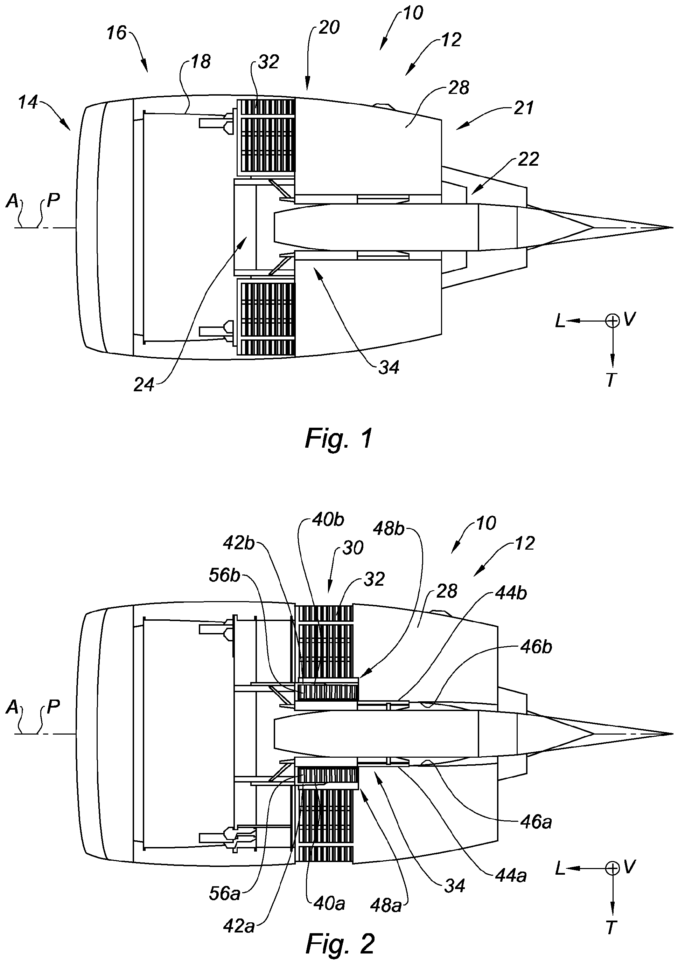

Dans la description et les revendications, on utilisera à titre non limitatif les expressions « supérieur », « inférieur » et « bas », « haut » en référence à la partie supérieure et à la partie inférieure respectivement des figures 1 à 4.

De plus, pour clarifier la description et les revendications, on adoptera à titre non limitatif la terminologie longitudinal, vertical et transversal en référence au trièdre L, V, T indiqué aux figures, dont l'axe L longitudinal est parallèle à l'axe de la nacelle.

A noter également que dans la présente demande de brevet, les termes « amont » et «aval » doivent s'entendre par rapport à la circulation du flux d'air à l'intérieur de l'ensemble propulsif formé par la nacelle et le turboréacteur, c'est-à-dire de la gauche vers la droite selon les figures 1 à 4.

Aussi, pour faciliter la compréhension de la description, les éléments identiques et symétriques suivant le plan P de symétrie sont indiqués par des mêmes références numériques distinguées par la lettre « a » ou « b ».

On a représenté à la figure 1 un ensemble arrière de nacelle 12 comportant un dispositif 10 d'inversion de poussée pour nacelle 12 de turboréacteur (non visible) d'aéronef par redirection d'un flux d'air circulant d'amont en aval dans une veine.

On entend ici par turboréacteur la partie aussi appelée « moteur » de l'ensemble propulsif formé par la nacelle 12 et le turboréacteur, c'est-à-dire la partie qui est agencée au centre de la nacelle 12.

La nacelle 12 présente une structure sensiblement tubulaire qui s'étend longitudinalement suivant l'axe central A et qui comprend une entrée d'air 14 en amont du turboréacteur, une section médiane 16 destinée à entourer une soufflante 18 du turboréacteur, une section aval 20 destinée à entourer la chambre de combustion du turboréacteur et intégrant le dispositif 10 d'inversion de poussée, et une tuyère 21 d'éjection dont la sortie est située en aval du turboréacteur.

Comme on peut le voir à la figure 1, la nacelle 12 est reliée sur la structure de l'aéronef par un mât 22 qui porte le turboréacteur au moyen d'une première suspension avant (non représentée) et d'une seconde suspension arrière (non représentée).

Le mât 22 est ici un mât du type « corps », qui est fixé sur le corps du turboréacteur, c'est-à-dire en aval du carter de soufflante 18, par exemple sur le moyen du carter de soufflante (non représenté).

Le dispositif 10 d'inversion de poussée comprend un capot 28 qui est monté mobile en translation longitudinale d'avant en arrière suivant l'axe A de la nacelle 12, entre une position de fermeture, représentée à la figure 1, dans laquelle le capot 28 assure la continuité aérodynamique de la nacelle 12, et une position d'ouverture, représentée à la figure 2, dans laquelle le capot 28 ouvre un passage 30 de déviation du flux d'air dans la nacelle 12.

De plus, le dispositif 10 comporte des grilles coulissantes 32 d'inversion de poussée qui sont entraînées par le capot 28 mobile, entre une position escamotée entre le carter de soufflante 18 et l'enveloppe externe de la nacelle 12, correspondant à la position de fermeture du capot 28, et une position d'inversion de poussée correspondant à la position d'ouverture du capot 28, position dans laquelle les grilles coulissantes 32 sont déplacées vers l'aval de manière à pouvoir s'étendre à travers le passage 30 ouvert par le capot 28 mobile dans la nacelle 12.

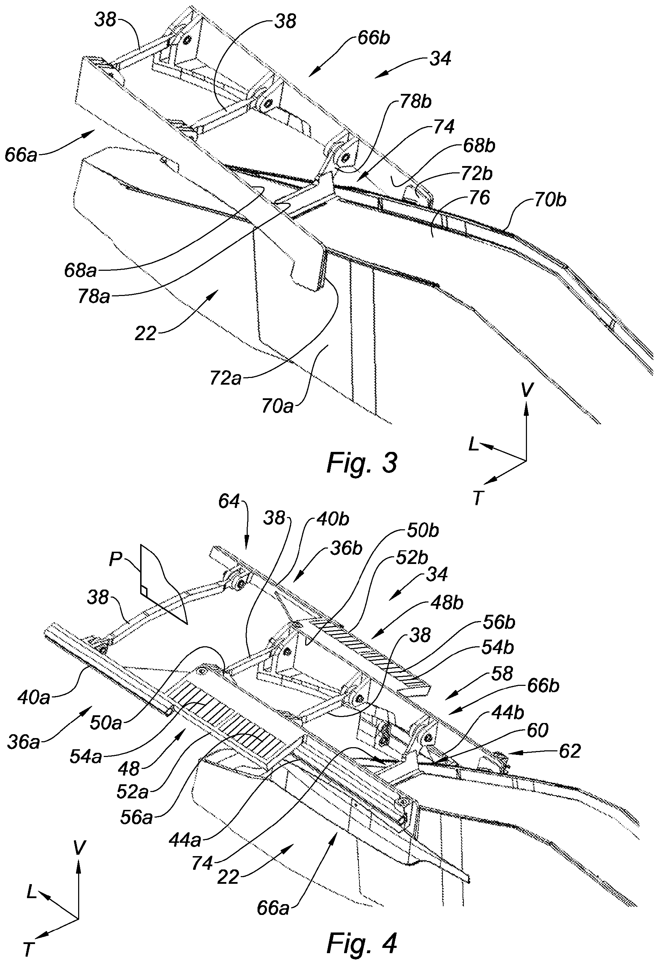

Conformément à l'invention, l'ensemble arrière de nacelle 12 est équipé d'un berceau 34, représenté plus en détails à la figure 4, qui présente une conception symétrique suivant un plan P vertical de symétrie passant par l'axe A longitudinal de la nacelle 12.

Le berceau 34 comporte un premier longeron 36a et un second longeron 36b qui s'étendent longitudinalement de part et d'autre du mât 22, et qui sont reliés entre eux par trois traverses qui sont ici des bielles 38 transversales conçues pour assurer le passage des efforts entre les deux longerons 36a, 36b.

A titre non limitatif, les bielles 38 peuvent être remplacées par des traverses.

Chaque bielle 38 comporte une première liaison pivot montée libre en pivotement sur le premier longeron 36a autour d'un axe globalement longitudinal, et une seconde liaison pivot montée libre en pivotement sur le second longeron 36b autour d'un axe globalement longitudinal.

Les longerons 36a, 36b comportent chacun des moyens de guidage en coulissement du capot 28 mobile et des grilles 32 coulissantes.

Les moyens de guidage en coulissement, représenté en détail à la figure 4, comportent une première paire de rails de guidage des grilles 32 qui comprend un premier rail 40a et un second rail 40b qui s'étendent longitudinalement, qui sont agencés symétriquement suivant le plan P de symétrie, et qui sont conçus pour assurer le coulissement des grilles 32 d'inversion de poussée.

A cet effet, en référence à la figure 2, les grilles 32, de forme globalement annulaire en C autour de l'axe A de la nacelle 12, présentent un premier bord de guidage 42a et un second bord de guidage 42b qui coopèrent avec le premier rail 40a et le second rail 40b respectivement.

De plus, les moyens de guidage en coulissement comportent une seconde paire de rails de guidage du capot 28 qui comprend un premier rail 44a et un second rail 44b qui s'étendent longitudinalement, qui sont agencés symétriquement suivant le plan P de symétrie, et qui sont conçus pour assurer le coulissement du capot 28 mobile.

A cet effet, le capot 28 mobile, de forme globalement annulaire en C autour de l'axe A de la nacelle 12, présente un premier bord de guidage 46a et un second bord de guidage 46b qui coopèrent avec le premier rail 44a et le second rail 44b respectivement.

Selon un autre aspect, le premier longeron 36a du berceau 34 comporte une première portion de liaison 48a qui est délimitée latéralement par un premier bord 50a longitudinal, et par un second bord 52a longitudinal qui porte le premier rail 40a de guidage des grilles 32 coulissantes.

Par symétrie, le second longeron 36b du berceau 34 comporte une seconde portion de liaison 48b qui est délimitée latéralement par un premier bord 50b longitudinal, et par un second bord 52b longitudinal qui porte le second rail 40b de guidage des grilles 32 coulissantes.

Les rails de guidage des grilles 32 sont représentés sur les figures écartés transversalement par rapport aux rails de guidage du capot 28.

En outre, les rails de guidage des grilles 32 peuvent être décalés verticalement également par rapport aux rails de guidage du capot 28.

Toutefois, lorsqu'un tel agencement n'est pas nécessaire, selon une variante de réalisation non représentée, le premier rail 40a de la première paire de rails de guidage des grilles 32 et le premier rail 44a de la seconde paire de rails de guidage du capot 28 sont alignés sur une même ligne droite.

De même, par symétrie, le second rail 40b de la première paire de rails de guidage des grilles 32 et le second rail 44b de la seconde paire de rails de guidage du capot 28 sont alignés sur une même ligne droite.

Ainsi, selon cette variante de réalisation, les rails de guidage des grilles 32 et les rails de guidage du capot 28 peuvent être réalisés en une seule pièce.

Aussi, chaque portion de liaison 48a, 48b comprend une ouverture 54a, 54b, illustrée à la figure 3, qui est découverte par le capot 28 mobile dans sa position d'ouverture, pour permettre la redirection du flux d'air.

Selon un exemple de réalisation préféré, illustré à la figure 2, chaque ouverture 54a, 54b est équipée d'une grille fixe 56a, 56b fixe respectivement, chaque grille comportant des ailettes conçues pour rediriger le flux d'air vers l'avant de la nacelle 12, pour participer à l'inversion de poussée, lorsque le capot 28 mobile occupe sa position d'ouverture.

Avantageusement, les ailettes des grilles fixes 56a, 56b peuvent être agencées de façon à orienter le flux d'air suivant un angle incliné transversalement pour éviter de rediriger le flux d'air vers l'aile de l'aéronef.

En variante, chaque ouverture 54a, 54b, ou une des ouvertures 54a, 54b, peut être tout ou partie obstruée pour optimiser l'efficacité de l'inverseur de poussée.

En effet, en jouant sur la surface d'éjection des ouvertures 54a, 54b, il est possible de jouer sur le rapport entre la surface d'éjection de la tuyère de l'ensemble propulsif et la surface d'éjection du passage découvert par le capot 28 mobile de l'inverseur. Ce rapport, qui idéalement tend vers la valeur un, est connu sous la dénomination anglaise « area match ».

Comme on peut le voir aux figures 3 et 4, les longerons 36a, 36b s'étendent globalement longitudinalement depuis le mât 22 en présentant avec le mât 22 un angle d'inclinaison de façon à compenser l'angle d'inclinaison du mât 22 plongeant vers le corps du turboréacteur, de sorte que le berceau 34 surplombe le mât 22.

Une portion arrière 58 du berceau 34 comporte un premier moyen de fixation avant 60 sur le mât 22 et un second moyen de fixation arrière 62 sur le mât 22 qui sont espacés suivant une direction longitudinale.

De plus, le berceau 34 comporte une portion avant 64, formant suspension, qui s'étend longitudinalement en porte à faux au-delà des moyens de fixation 60, 62 du berceau 34.

Plus particulièrement, la portion arrière 58 du berceau 34 forme un premier bras 66a et un second bras 66b qui s'étendent verticalement et qui sont délimités par une face intérieure 68a, 68b respectivement verticale en appui sur un premier flanc 70a, et un second flanc 70b du mât 22.

L'extrémité libre arrière de chaque bras 66a, 66b, formant le moyen de fixation arrière 62 du berceau 34, est fixée sur le mât 22 par une fixation amovible du type vis écrou (non représentée).

En référence à la figure 3, une première cale 72a et une seconde cale 72b sont interposées entre l'extrémité libre du premier bras 66a et du second bras 66b pour régler le parallélisme des bras et des rails 40a, 40b, 44a, 44b de guidage.

Le moyen de fixation avant 60 du berceau 34 sur le mât 22 est constitué par une traverse d'ancrage 74 transversale qui est fixée sur une face supérieure 76 du mât 22, par exemple par un ensemble vis-écrous (non représenté).

La traverse d'ancrage 74 est reliée à ses extrémités libres transversales sur la face intérieure 68a du premier bras 66a et sur la face intérieure 68b du second bras 66b par une première biellette 78a et une seconde biellette 78b respectivement.

Avantageusement, le moyen de fixation avant 60 et le moyen de fixation arrière 62 sur le mât 22 sont rapprochés suivant une direction longitudinale de sorte que la portion avant 64 du berceau est en porte à faux et présente de ce fait une certaine souplesse.

Cette caractéristique permet au berceau 34 de suivre les mouvements du turbocompresseur et permet également d'atténuer sensiblement les mouvements du turbocompresseur.

Ainsi, en cas de mouvement du turboréacteur, notamment en cas de cabrage, le dispositif 10 d'inversion de poussée suit globalement ce mouvement du turboréacteur.

Cette caractéristique permet notamment aux grilles 32 coulissantes et au capot 28 mobile, ainsi que leur rails de guidage 40a, 40b, 44a, 44b de suivre le mouvement du turbocompresseur.

Avantageusement, selon une variante de réalisation non représentée, la nacelle 12 présente une structure interne fixe, qui entoure une section aval du turboréacteur et qui comporte des îlots reliés sur le berceau 34..

De même, selon une variante de réalisation non représentée, le dispositif 10 d'inversion de poussée comporte des verrous de sécurité conçu pour empêcher le déploiement intempestif du capot 28 mobile.

La présente description de l'invention est donnée à titre d'exemple non limitatif.

## Revendications

1. Ensemble arrière de nacelle (12) pour turboréacteur comprenant au moins un dispositif (10) d'inversion de poussée adapté pour rediriger un flux d'air circulant d'amont en aval dans une veine du turboréacteur et un mât conçu pour relier la nacelle (12) sur la structure de l'aéronef, la nacelle (12) s'étendant longitudinalement d'avant en arrière suivant un axe (A), le dispositif (10) d'inversion de poussée comprenant au moins :
- un capot (28) qui est monté mobile en translation longitudinale d'avant en arrière selon une direction sensiblement parallèle à l'axe (A) de la nacelle (12), entre une position de fermeture dans laquelle le capot (28) assure la continuité aérodynamique de la nacelle (12), et une position d'ouverture dans laquelle le capot (28) ouvre un passage (30) dans la nacelle (12),
- au moins une grille (32) coulissante d'inversion de poussée qui est entraînée par le capot (28) mobile, entre une position escamotée entre un carter de soufflante (18) et une enveloppe externe de la nacelle (12), correspondant à la position de fermeture du capot (28), et une position d'inversion de poussée correspondant à la position d'ouverture du capot (28), position dans laquelle la grille (32) coulissante est déplacée vers l'aval de manière à pouvoir s'étendre à travers ledit passage (30) ouvert par le capot (28), et
- un berceau (34) qui est fixé sur le mât (22) et qui comporte un premier longeron (36a) et un second longeron (36b) s'étendant globalement longitudinalement de part et d'autre du mât (22), lesdits longerons portant chacun des moyens de guidage (40a, 40b, 44a, 44b) en coulissement du capot (28) mobile et de la grille (32) coulissante,
**caractérisé en ce qu'**une portion arrière (58) du berceau (34) comporte un premier moyen de fixation avant (60) sur le mât (22) et un second moyen de fixation arrière (62) sur le mât (22), lesdits moyens de fixation étant espacés longitudinalement, et **en ce que** le berceau (34) comporte une portion avant (64), formant suspension, qui s'étend longitudinalement en porte à faux au-delà desdits moyens de fixation (60, 62).

2. Ensemble arrière de nacelle (12) selon la revendication 1, **caractérisé en ce que** le mât (22) présente un tronçon avant qui est adapté pour être relié sur le corps du turbocompresseur par l'intermédiaire d'une première suspension.

3. Ensemble arrière de nacelle (12) selon la revendication 2, **caractérisé en ce que** lesdits longerons (36a, 36b) s'étendent globalement vers l'avant longitudinalement depuis le mât (22) en présentant avec le mât (22) un angle d'inclinaison de façon à compenser l'angle d'inclinaison du mât (22) adapté pour plonger vers le corps du turboréacteur, de sorte que au moins une partie du berceau (34) surplombe le mât (22).

4. Ensemble arrière de nacelle (12) selon l'une quelconque des revendications précédentes, **caractérisé en ce qu'**il comporte au moins une traverse (38) transversale qui relie le premier longeron (36a) et le second longeron (36b) du berceau (34) entre eux transversalement et qui est conçue pour assurer le passage des efforts entre lesdits longerons (36a, 36b).

5. Ensemble arrière de nacelle (12) selon les revendications 1 et 4, **caractérisé en ce que** la traverse (38) est une bielle qui comporte :
- une première liaison pivot montée libre en pivotement sur le premier longeron (36a) autour d'un axe globalement longitudinal, et
- une seconde liaison pivot montée libre en pivotement sur le second longeron (36b) autour d'un axe globalement longitudinal.

6. Ensemble arrière de nacelle (12) selon l'une quelconque des revendications précédentes, **caractérisé en ce que** les moyens de guidage (40a, 40b, 44a, 44b) en coulissement du capot (28) mobile et de la grille (32) coulissante comportent au moins :
- une première paire de rails (40a, 40b) de guidage de la grille (32), comprenant un premier rail (40a) et un second rail (40b) qui sont agencés de part et d'autre du mât (22) et qui sont conçus pour assurer le coulissement de la grille (32) d'inversion de poussée, et
- une seconde paire de rails (44a, 44b) de guidage du capot (28), comprenant un premier rail (44a) et un second rail (44b) qui sont agencés de part et d'autre du mât (22) et qui sont conçus pour assurer le coulissement du capot (28) mobile.

7. Ensemble arrière de nacelle (12) selon la revendication 6, **caractérisé en ce que** le premier rail (40a) de la première paire de rails (40a, 40b) de guidage de la grille (32) et le premier rail (44a) de la seconde paire de rails (44a, 44b) de guidage du capot (28) sont alignés sur une même ligne droite, et le second rail (40b) de la première paire de rails (40a, 40b) de guidage de la grille (32) et le second rail (44b) de la seconde paire de rails (44a, 44b) de guidage du capot (28) sont alignés sur une même ligne droite.

8. Ensemble arrière de nacelle (12) selon l'une quelconque des revendications 6 et 7, **caractérisé en ce que** le premier longeron (36a) du berceau (34) comporte une première portion de liaison (48a) qui est délimitée latéralement par un premier bord (50a) longitudinal qui s'étend au voisinage du mât (22), et par un second bord (52a) longitudinal qui porte au moins le premier rail (40a) de guidage de la grille (32), et le second longeron 36b du berceau 34 comporte une seconde portion de liaison (48b) qui est délimitée latéralement par un premier bord (50b) longitudinal qui s'étend au voisinage du mât (22), et par un second bord (52b) longitudinal qui porte au moins le second rail (40b) de guidage de la grille (32).

9. Ensemble arrière de nacelle (12) selon la revendication 8, **caractérisé en ce que** chaque portion de liaison (48a, 48b) comprend une ouverture (54a) qui est découverte par le capot (28) mobile dans sa position d'ouverture, pour permettre la redirection du flux d'air, ladite ouverture (54a) étant adaptée pour être tout ou partie obstruée selon les besoins.

10. Ensemble arrière de nacelle (12) selon l'une quelconque des revendications précédentes, **caractérisé en ce que** la nacelle (12) présente une structure interne fixe qui comporte des îlots reliés sur le berceau (34).

11. Ensemble arrière de nacelle (12) selon l'une quelconque des revendications précédentes, **caractérisé en ce que** le dispositif (10) comporte au moins un verrou de sécurité de non déploiement intempestif du capot (28) mobile.

## Patentansprüche

1. Hintere Gondelanordnung (12) für ein Turbinen-Strahltriebwerk, umfassend mindestens eine Schubumkehrvorrichtung (10), die dafür geeignet ist, einen Luftstrom umzulenken, der in einem Kanal des Turbinen-Strahltriebwerks von stromaufwärts nach stromabwärts zirkuliert, und einen Mast, der dafür konzipiert ist, die Gondel (12) an die Struktur des Flugzeugs anzubinden, wobei sich die Gondel (12) in Längsrichtung von vorne nach hinten gemäß einer Achse (A) erstreckt, wobei die Schubumkehrvorrichtung (10) mindestens umfasst:
- eine Abdeckung (28), die in Längsrichtung von vorne nach hinten gemäß einer Richtung, die im Wesentlichen zur Achse (A) der Gondel (12) parallel ist, zwischen einer Schließstellung, in der die Abdeckung (28) die aerodynamische Kontinuität der Gondel (12) sicherstellt, und einer Öffnungsstellung, in der die Abdeckung (28) einen Durchgang (30) in der Gondel (12) öffnet, translationsbeweglich montiert ist,
- mindestens ein verschiebbares Schubumkehrgitter (32), das von der beweglichen Abdeckung (28) zwischen einer versenkten Stellung zwischen einem Gebläsegehäuse (18) und einer Außenhülle der Gondel (12), die der Schließstellung der Abdeckung (28) entspricht, und einer Schubumkehrstellung, die der Öffnungsstellung der Abdeckung (28) entspricht, angetrieben wird, Stellung, in der das verschiebbare Gitter (32) in Stromabwärtsrichtung verlagert ist, um sich durch den von der Abdeckung (28) geöffneten Durchgang (30) hindurch erstrecken zu können, und
- einen Schlitten (34), der am Mast (22) befestigt ist und der einen ersten Längsträger (36a) und einen zweiten Längsträger (36b) umfasst, die sich allgemein in Längsrichtung auf beiden Seiten des Masts (22) erstrecken, wobei die Längsträger jeder Mittel zum Führen (40a, 40b, 44a, 44b) der beweglichen Abdeckung (28) und des verschiebbaren Gitters (32) in Verschiebebewegung tragen,
**dadurch gekennzeichnet, dass** ein hinterer Abschnitt (58) des Schlittens (34) ein erstes vorderes Mittel zur Befestigung (60) am Mast (22), und ein zweites hinteres Mittel zur Befestigung (62) am Mast (22) umfasst, wobei die Befestigungsmittel in Längsrichtung beabstandet sind, und dadurch, dass der Schlitten (34) einen eine Aufhängung bildenden vorderen Abschnitt (64) umfasst, der sich in Längsrichtung freitragend über die Befestigungsmittel (60, 62) hinaus erstreckt.

2. Hintere Gondelanordnung (12) nach Anspruch 1, **dadurch gekennzeichnet, dass** der Mast (22) ein vorderes Teilstück aufweist, das dafür geeignet ist, mittels einer ersten Aufhängung an den Körper des Turbinen-Strahltriebwerks angebunden zu werden.

3. Hintere Gondelanordnung (12) nach Anspruch 2, **dadurch gekennzeichnet, dass** sich die Längsträger (36a, 36b) ab dem Mast (22) allgemein in Längsrichtung nach vorne erstrecken, wobei sie zum Mast (22) einen Neigungswinkel aufweisen, um den Neigungswinkel des Masts (22) zu kompensieren, der dafür geeignet ist, so zum Körper des Turbinen-Strahltriebwerks hin abzufallen, dass mindestens ein Teil des Schlittens (34) den Mast (22) überragt.

4. Hintere Gondelanordnung (12) nach einem der vorstehenden Ansprüche, **dadurch gekennzeichnet, dass** sie mindestens eine Quertraverse (38) umfasst, die den ersten Längsträger (36a) und den zweiten Längsträger (36b) des Schlittens (34) zwischen denselben in Querrichtung verbindet, und die dafür konzipiert ist, den Durchgang der Kräfte zwischen den Längsträgern (36a, 36b) sicherzustellen.

5. Hintere Gondelanordnung (12) nach den Ansprüchen 1 und 4, **dadurch gekennzeichnet, dass** die Traverse (38) ein Pleuel ist, der umfasst:
- eine erste Schwenkverbindung, die am ersten Längsträger (36a) frei um eine allgemeine Längsachse herum schwenkbeweglich montiert ist, und
- eine zweite Schwenkverbindung, die am zweiten Längsträger (36b) frei um eine allgemeine Längsachse herum schwenkbeweglich montiert ist.

6. Hintere Gondelanordnung (12) nach einem der vorstehenden Ansprüche, **dadurch gekennzeichnet, dass** die Mittel zum Führen (40a, 40b, 44a, 44b) der beweglichen Abdeckung (28) und des verschiebbaren Gitters (32) in Verschiebebewegung mindestens umfassen:
- ein erstes Schienenpaar (40a, 40b) zum Führen des Gitters (32), das eine erste Schiene (40a) und eine zweite Schiene (40b) umfasst, die auf beiden Seiten des Masts (22) angeordnet sind und die dafür konzipiert sind, die Verschiebebewegung des Schubumkehrgitters (32) sicherzustellen, und
- ein zweites Schienenpaar (44a, 44b) zum Führen der Abdeckung (28), das eine erste Schiene (44a) und eine zweite Schiene (44b) umfasst, die auf beiden Seiten des Masts (22) angeordnet sind und die dafür konzipiert sind, die Verschiebebewegung der beweglichen Abdeckung (28) sicherzustellen.

7. Hintere Gondelanordnung (12) nach Anspruch 6, **dadurch gekennzeichnet, dass** die erste Schiene (40a) des ersten Schienenpaars (40a, 40b) zum Führen des Gitters (32), und die erste Schiene (44a) des zweiten Schienenpaars (44a, 44b) zum Führen der Abdeckung (28) auf ein und derselben geraden Linie ausgerichtet sind, und die zweite Schiene (40b) des ersten Schienenpars (40a, 40b) zum Führen des Gitters (32), und die zweite Schiene (44b) des zweiten Schienenpaars (44a, 44b) zum Führen der Abdeckung (28) auf ein und derselben geraden Linie ausgerichtet sind.

8. Hintere Gondelanordnung (12) nach einem der Ansprüche 6 und 7, **dadurch gekennzeichnet, dass** der erste Längsträger (36a) des Schlittens (34) einen ersten Verbindungsabschnitt (48a) umfasst, der seitlich von einer ersten Längskante (50a) begrenzt wird, die sich in der Nachbarschaft des Masts (22) erstreckt, und von einerzweiten Längskante (52a), die mindestens die erste Schiene (40a) zum Führen des Gitters (32) trägt, und der zweite Längsträger (36b) des Schlittens (34) einen zweiten Verbindungsabschnitt (48b) umfasst, der seitlich von einer ersten Längskante (50b) begrenzt wird, die sich in der Nachbarschaft des Masts (22) erstreckt, und von einer zweiten Längskante (52b), die mindestens die zweite Schiene (40b) zum Führen des Gitters (32) trägt.

9. Hintere Gondelabdeckung (12) nach Anspruch 8, **dadurch gekennzeichnet, dass** jeder Verbindungsabschnitt (48a, 48b) eine Öffnung (54a) umfasst, die von der beweglichen Abdeckung (28) in ihrer Öffnungsstellung freigelegt wird, um das Umlenken des Luftstroms zu ermöglichen, wobei die Öffnung (54a) dafür geeignet ist, je nach Bedarf ganz oder zum Teil verschlossen zu werden.

10. Hintere Gondelanordnung (12) nach einem der vorstehenden Ansprüche, **dadurch gekennzeichnet, dass** die Gondel (12) eine feste innere Struktur aufweist, die Inseln umfasst, welche an den Schlitten (34) angebunden sind.

11. Hintere Gondelanordnung (12) nach einem der vorstehenden Ansprüche, **dadurch gekennzeichnet, dass** die Vorrichtung (10) mindestens eine Sicherheitsverriegelung zum nicht versehentlichen Ausfahren der beweglichen Abdeckung (28) umfasst.

## Claims

1. A rear nacelle assembly (12) for a turbojet engine comprising at least one thrust reverser device (10) adapted to redirect an air flow circulating from upstream to downstream in a flow path of the turbojet engine and a mast designed to connect the nacelle (12) on the structure of the aircraft, the nacelle (12) extending longitudinally from front to back along an axis (A), the thrust reverser device (10) comprising at least:
- a cowl (28) which is movably mounted in longitudinal translation from front to back in a direction substantially parallel to the axis (A) of the nacelle (12), between a closed position in which the cowl (28) ensures the aerodynamic continuity of the nacelle (12), and an open position in which the cowl (28) opens a passage (30) in the nacelle (12),
- at least one sliding thrust reverser cascade (32) which is driven by the movable cowl (28) between a retracted position between a fan casing (18) and an outer envelope of the nacelle (12), corresponding to the closed position of the cowl (28), and a thrust reversal position corresponding to the open position of the cowl (28), position in which the sliding cascade (32) is displaced downstream so as to be able to extend through said passage (30) opened by the cowl (28), and
- cradle (34) which is fastened on the mast (22) and which includes a first spar (36a) and a second spar (36b) extending generally longitudinally on either side of the mast (22), said spars each carrying means (40a, 40b, 44a, 44b) for slidably guiding the movable cowl (28) and the sliding cascade (32),
**characterized in that** a rear portion (58) of the cradle (34) includes a first front fastening means (60) on the mast (22) and a second rear fastening means (62) on the mast (22), said fastening means being spaced longitudinally, and **in that** the cradle (34) includes a front portion (64), forming a suspension, which extends longitudinally cantilevered beyond said fastening means (60, 62).

2. The rear nacelle assembly (12) according to claim 1, **characterized in that** the mast (22) has a front section which is adapted to be connected onto the body of the turbo-compressor via a first suspension.

3. The rear nacelle assembly (12) according to claim 2, **characterized in that** said spars (36a, 36b) extend generally forwards longitudinally from the mast (22) by having with the mast (22) an angle of inclination so as to compensate for the angle of inclination of the mast (22) adapted to plunge towards the body of the turbojet engine, such that at least part of the cradle (34) overhangs the mast (22).

4. The rear nacelle assembly (12) according to any one of the preceding claims, **characterized in that** it includes at least one transverse cross-member (38) which connects the first spar (36a) and the second spar (36b) of the cradle (34) together transversely and which is designed to ensure the passage of the forces between said spars (36a, 36b).

5. The rear nacelle assembly (12) according to claims 1 and 4, **characterized in that** the cross-member (38) is a connecting rod which includes:
- a first pivot connection freely pivotally mounted on the first spar (36a) about a generally longitudinal axis, and
- a second pivot connection freely pivotally mounted on the second spar (36b) about a generally longitudinal axis.

6. The rear nacelle assembly (12) according to any one of the preceding claims, **characterized in that** the means (40a, 40b, 44a, 44b) for slidably guiding the movable cowl (28) and the sliding cascade (32) include at least:
- a first pair of rails (40a, 40b) for guiding the cascade (32), comprising a first rail (40a) and a second rail (40b) which are arranged on either side of the mast (22) and which are designed to ensure the sliding of the thrust reverser cascade (32), and
- a second pair of rails (44a, 44b) for guiding the cowl (28), comprising a first rail (44a) and a second rail (44b) which are arranged on either side of the mast (22) and which are designed to ensure the sliding of the movable cowl (28).

7. The rear nacelle assembly (12) according to claim 6, **characterized in that** the first rail (40a) of the first pair of rails (40a, 40b) for guiding the cascade (32) and the first rail (44a) of the second pair of rails (44a, 44b) for guiding the cowl (28) are aligned on the same straight line, and the second rail (40b) of the first pair of rails (40a, 40b) for guiding the cascade (32) and the second rail (44b) of the second pair of rails (44a, 44b) for guiding the cowl (28) are aligned on the same straight line.

8. The rear nacelle assembly (12) according to any one of claims 6 and 7, **characterized in that** the first spar (36a) of the cradle (34) includes a first connecting portion (48a) which is laterally delimited by a first longitudinal edge (50a) which extends in the vicinity of the mast (22), and by a second longitudinal edge (52a) which carries at least the first rail (40a) for guiding the cascade (32), and the second spar (36b) of the cradle (34) includes a second connecting portion (48b) which is laterally delimited by a first longitudinal edge (50b) which extends in the vicinity of the mast (22), and by a second longitudinal edge (52b) which carries at least the second rail (40b) for guiding the cascade (32).

9. The rear nacelle assembly (12) according to claim 8, **characterized in that** each connecting portion (48a, 48b) comprises an opening (54a) which is uncovered by the movable cowl (28) in its open position, in order to allow redirection of the air flow, said opening (54a) being adapted to be in whole or in part obstructed as required.

10. The rear nacelle assembly (12) according to any one of the preceding claims, **characterized in that** the nacelle (12) has an inner fixed structure which includes islands connected on the cradle (34).

11. The rear nacelle assembly (12) according to any one of the preceding claims, **characterized in that** the device (10) includes at least one security lock of inadvertent non-deployment of the movable cowl (28).
